# EUROPEAN PATENT SPECIFICATION

(11) **EP 3 046 335 B1**
(45) Date of publication and mention of the grant of the patent: **03.01.2018**
(21) Application number: 15305032.3
(22) Date of filing: 15.01.2015
(51) Int. Cl.: H04Q 11/00

(54) **Optical switching apparatus**
Optische Schaltvorrichtung
Appareil de commutation optique

(43) Date of publication of application: 20.07.2016
(73) Proprietor: ALCATEL LUCENT, 92100 Boulogne-Billancourt (FR)
(72) Inventor: Zami, Thierry, 91620 NOZAY (FR); Lefrancois, Mathieu, 91620 NOZAY (FR)
(74) Representative: Berthier, Karine

(56) References cited:
- US-A1- 2008 124 077
- US-A1- 2008 260 383
- US-A1- 2009 142 057
- EUGENIO IANNONE ET AL: "Optical Path Technologies: A Comparison Among Different Cross-Connect Architectures", JOURNAL OF LIGHTWAVE TECHNOLOGY, IEEE SERVICE CENTER, NEW YORK, NY, US, vol. 14, no. 10, 1 October 1996 (1996-10-01), XP011028654, ISSN: 0733-8724

## Description

### Field of the invention

The invention relates to the technical field of optical communication systems, in particular to network elements such as switching devices for wavelength division multiplexing (WDM) networks.

### Background

In order to construct an optical switching apparatus for WDM networks, subsystems known as Wavelength Selective Switches (WSS) are particularly attractive. WSSs make it possible to create switching nodes having a very flexible configuration with a much simpler structure than when using discrete components, as well as a reduced size and high reliability.

The degree of connectivity of an optical node refers to the number of its adjacent nodes. In some network configuration, optical switching nodes having a high degree of connectivity are desirable.

US2008260383 discloses a Centralized Resource Management (CRM) system that supports the sharing of all the transponders in a WXC node, i.e., any spare transponder can be reconfigured to accommodate any drop channel, regardless of wavelength or input port.

US2008124077 discloses an optical node for optical burst transport that includes optical components operable to transmit and receive optical signals over an optical transmission medium. The optical components include a demultiplexer that is operable to receive a wavelength division multiplexed (WDM) optical signal at an input port and to separate the WDM optical signal into two or more constituent wavelength signals, and a switching matrix that includes one or more electro-optic switches. Each electro-optic switch is operable to receive a wavelength signal and switch the signal to one of two outputs, and the outputs include an output port of the optical node and one or more drop output ports of the optical node.

In US2009142057, in order to insert a regenerator into a wavelength cross-connect equipment, there is provided at least one port that demultiplexes one wavelength among the wavelength multiplexed signals that are input to a wavelength selective switch.

Optical path technologies: A comparison among different cross-connect architectures (E Iannone, R Sabella, in Journal of Liahtwave Technology, 1996) discloses different optical cross-connect architectures based on space division or wavelength division switching in order to compare modularity, complexity and transmission performance.

### Summary

Aspects of the disclosure are based on the idea of providing a uniform filtering impairment in an optical switching apparatus.

In an embodiment, the invention provides an optical switching apparatus for a WDM optical network, the optical switching apparatus comprising:
a plurality of WDM optical input ports for receiving WDM optical signals from adjacent nodes, and
a plurality of WDM optical output ports for transmitting WDM optical signals to the adjacent nodes, and
a plurality of primary input WSSs, each primary input WSS comprising an input port and a plurality of selective output ports and being arranged as a programmable wavelength demultiplexer, wherein the input port of each primary input WSS is connected to a respective one of the WDM optical input ports, and
a plurality of primary output WSSs, wherein each primary output WSS comprising an output port and a plurality of selective input ports and being arranged as a programmable wavelength multiplexer, wherein the output port of each primary output WSS is connected to a respective one of the WDM optical output ports, and
a plurality of secondary WSSs, each secondary WSS being selected in the group consisting of a secondary input WSS and a secondary output WSS, the secondary input WSS comprising an input port and a plurality of selective output ports and being arranged as a programmable wavelength demultiplexer, wherein the input port of the secondary input WSS is connected to an output port of a primary input WSS , and the secondary output WSS comprising an output port and a plurality of selective input ports and being arranged as a programmable wavelength multiplexer, wherein the output port of the secondary output WSS is connected to an input port of a primary output WSS, and
a plurality of transit paths for transmitting optical signals from the WDM optical input ports to the WDM optical output ports of the optical switching apparatus,
   wherein each of the transit paths is selected in the group consisting of:
      - transit paths connecting an output port of a primary input WSS to an input port of a secondary output WSS , and
      - transit paths connecting an output port of a secondary input WSS to an input port of a primary output WSS

According to embodiments, such an apparatus can comprise one or more of the features below.

In an embodiment, the WDM optical input ports and the WDM optical output ports are arranged as a plurality of pairs of WDM ports, wherein a respective pair of WDM ports comprises one respective WDM optical input port and one respective WDM optical output port intended to be connected to a same adjacent node,
wherein, for each pair of WDM ports whose WDM optical input port is connected to the input port of a primary input WSS and whose WDM optical output port is connected to the output port of a primary output WSS, a respective one of the secondary WSSs is associated to the pair of WDM ports, wherein the associated secondary WSS is selected in the group consisting of:
- a secondary input WSS being connected to the primary input WSS having an input connected to the WDM input port of the pair of WDM ports, and
- a secondary output WSS being connected to the primary output WSS having an output connected to the WDM output port of the pair.

In an embodiment, each primary input WSS is connected to a secondary input WSS.

In an embodiment, each primary output WSS is connected to a secondary output WSS.

In an embodiment, a primary input WSS has a first selective output port connected to a first secondary input WSS and a second selective output port connected to a second secondary input WSS.

In an embodiment, a primary output WSS is connected to a first secondary output WSS and to a second secondary output WSS.

In an embodiment, a primary input WSS which is connected to at least one secondary input WSS has primary transit ports and wherein the at least one secondary input WSS has secondary transit ports ,
wherein the primary transit ports are the output ports of the primary input WSS which are directly connected to the transit paths, wherein the secondary transit ports are the output ports of the secondary input WSS which are directly connected to the transit paths,
wherein a number of the primary transit ports is equal to a cumulated number of the secondary transit ports of the at least one secondary input WSS.

In this context, the cumulated number of the secondary transit ports means for example the total number of secondary transit ports of a first secondary WSS and a second secondary WSS if there are two secondary WSSs connected to a same primary WSS, and the total number of secondary transit ports of a secondary WSS if there is a single secondary WSS connected to a primary WSS.
In an embodiment, a primary output WSS which is connected to at least one secondary output WSS has primary transit ports and wherein the at least one secondary output WSS has secondary transit ports,
wherein the primary transit ports are the input ports of the primary output WSS which are directly connected to the transit paths, wherein the secondary transit ports are the input ports of the secondary output WSS which are directly connected to the transit paths,
wherein a number of the primary transit ports is equal to a cumulated number of the secondary transit ports of the at least one secondary output WSS.

In an embodiment, each primary input WSS which is connected to at least one secondary input WSS has primary transit ports and wherein the at least one secondary input WSS has secondary transit ports,
wherein the primary transit ports are the output ports of the primary input WSS which are directly connected to the transit path, wherein the secondary transit ports are the output ports of the secondary input WSS which are directly connected to the transit paths,
wherein a number of the primary transit ports is equal to a cumulated number of the secondary transit ports of the at least one secondary input WSS.

In an embodiment, each primary output WSS which is connected to at least one secondary output WSS has primary transit ports and wherein the at least one secondary output WSS has secondary transit ports,
wherein the primary transit ports are the input ports of the primary output WSS which are directly connected to the transit path, wherein the secondary transit ports are the input ports of the secondary output WSS which are directly connected to the transit paths,
wherein a number of the primary transit ports is equal to a cumulated number of the secondary transit ports of the at least one secondary output WSS.

In an embodiment, each primary input WSS and each primary output WSS has the same number of transit ports.

In an embodiment, the number of adjacent nodes connectable to the apparatus is equal to half the number of transit ports of each primary input WSS and each primary output WSS.

In an embodiment, the WDM optical input ports and the WDM optical output ports are arranged as a plurality of pairs of WDM ports, wherein a respective pair of WDM ports comprises one respective WDM optical input port and one respective WDM optical output port intended to be connected to a same adjacent node,
wherein each of the transit paths is selected in the group consisting of:
- transit paths connecting an output port of a primary input WSS to an input port of a secondary output WSS , the primary input WSS being connected to a WDM optical input port and the secondary output WSS being connected to a primary output WSS which is connected to a WDM optical output port, the WDM optical input port and the WDM optical output port belonging to two different pairs of WDM ports ;
- transit paths connecting an output port of a secondary input WSS to an input port of a primary output WSS, the secondary input WSS being connected to a primary input WSS which is connected to a WDM optical input port and the primary output WSS being connected to a WDM optical output port, the WDM optical input port and the WDM optical output port belonging to two different pairs of WDM ports.

In an embodiment, the number of primary input WSSs is equal to the number of primary output WSSs.

In an embodiment, the number of secondary input WSSs is equal to the number of secondary output WSSs.

Aspects of the disclosure stem for the observation that there is a need to increase the connectivity degree of the nodes in a transparent optical network.

Aspects of the disclosure are based on the idea of cascading WSSs in order to increase the connectivity degree of an optical switching apparatus.

Aspects of the disclosure are based on the idea of cascading WSSs in order to increase the number of available add and drop ports in an optical switching apparatus.

Aspects of the disclosure stem for the observation that cascading WSSs at the input and/or at the output of an optical switching apparatus implies an increase of the number of filtering stages for an optical signal routed through the transit part of the apparatus.

Aspects of the disclosure stem for the observation that cascading WSSs at the input and/or at the output of an optical switching apparatus implies a difference in the number of filtering stages experienced by optical signals routed through the transit part of the apparatus, depending on the transit paths employed.

Further aspects of the disclosure are based on the idea of providing an optical switching apparatus that offers some or all of the following features:
- High connectivity degree, e.g. higher than 20,
- transparency, wherein the term "transparent" is applied to a transmission system, in which the signal remains optical without being converted into an electronic signal when passing through a network switching node,
- High transit capacity,
- Low contention or contentionless operations,
- Progressive scalability or suitability for pay-as-you grow deployment,
- Cost-efficiency,
- Low insertion losses,
- Compact footprint.
- Providing a satisfactory compromise between low insertion loss and acceptable contention.

Aspects of the disclosure stem for the observation that cascading a primary WSS and a secondary WSS lowers the number of available transit ports of the primary WSS. Cascading a primary WSS and a secondary WSS refers to the connection of the secondary WSS to an output port of the primary WSS. Therefore the number of available transit ports of the primary WSS is decreased by one.

### Brief description of the drawings

These and other aspects of the invention will be apparent from and elucidated with reference to the embodiments described hereinafter, by way of non-limitative examples, with reference to the drawings.
Figure 1 is an exemplary functional representation of an optical WDM network comprising five optical nodes.
Figure 2 an exemplary functional representation of a secondary input WSS cascaded with a primary input WSS.
Figure 3 is an exemplary functional representation of an embodiment of an optical switching device according to the invention.
Figure 4 is an exemplary functional representation of a second embodiment of an optical switching device according to the invention.
Figure 5 is an exemplary functional representation of a third embodiment of an optical switching device according to the invention.

### Detailed description of illustrative embodiments

In a transparent WDM optical network, optical switching nodes are connected by optical links to form a given topology.

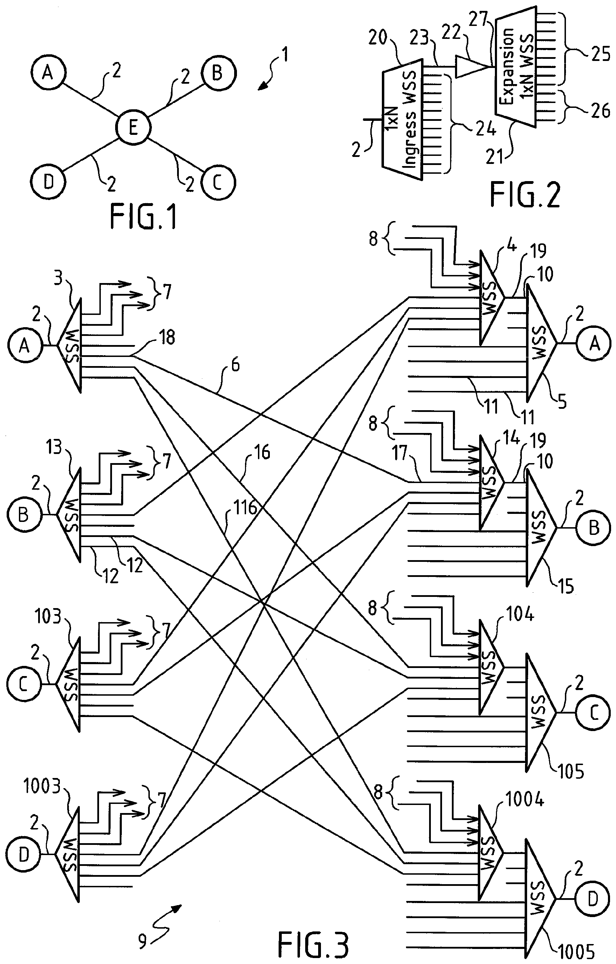

In an illustrative example, with reference to Figure 1, an optical WDM network 1 is represented. The nodes are represented by circles and denoted by letters from A to E. The central node E is linked by each other nodes by optical links 2. In this example, the connectivity degree of the node E is equal to 4. For example, data encoded in an optical signal transmitted by the node A to the node B are routed by the node E. Such a node E may comprise an optical switching apparatus.

An optical switching apparatus 9 according to an embodiment of the invention is represented with reference to Figure 3. For the sake of illustration, the optical switching apparatus 9 is an optical switching apparatus which enables to switch optical signals in the node E of the WDM optical network 1 represented with reference to Figure 1.

In embodiment, the number of adjacent nodes may be any number equal to or higher than 2.

The optical switching apparatus 9 comprises four WDM optical input ports 2 for receiving WDM optical signals from adjacent nodes A to D, and four WDM optical output ports 2 for transmitting WDM optical signals to the adjacent nodes A to D.

Each WDM optical input port 2 is connected to a input port of a primary input wavelength selective switch (WSS) 3, 13, 103 or 1003 and each WDM optical output ports 2 is connected to an output port of a primary output WSS 5, 15, 105 and 1005.

A WSS used in such an optical switching apparatus refers to a device that may be used as a reconfigurable multiplexer or a reconfigurable demultiplexer. Functional features of such a WSS are described below.

When it is acting as a multiplexer, as the primary output WSS 5, 15, 105 and 1005 are, a plurality of selectable ports 10, 11 serve as WSS input ports, and a common port serves as a WSS output port 2.

For instance, the primary output WSS 5 comprises grating components capable of separating a WDM optical signal received at a WSS input port 10, 11 into a plurality of beams corresponding to predefmed non-overlapping spectral bands, and light steering means capable of steering independently the optical beam corresponding to a respective spectral band either towards the WSS output port 2 or towards an absorber. Thereby, the spectral component of the incoming WDM signal belonging to a spectral band can be switched as a whole, i.e. either passed to the common WSS output port 2 or blocked. The same function is achieved for each spectral band at each WSS input port 10, 11.

The primary output WSS 5 thereby carries out a reconfigurable multiplexing function on spectral bands whose optical frequencies are aligned with one or more predetermined frequency grids. It makes it possible to pass, from each WSS input port 10, 11 to the common WSS output port 2, one spectral band, multiple spectral bands, or no spectral band, selected from among the signals received at the respective WSS input port 10, 11.

The switching or steering of beams within the WSS 5 is produced by spatial light manipulation elements, such as micromirrors activated by micro electro-mechanical systems (MEMS) micro-actuators or liquid crystal cells. In addition to selecting the spectral bands, these elements may be capable of adjusting the signal attenuation for each spectral band. In this manner, each WSS 5, 15, 105 and 1005 serves to both select the spectral bands that must be passed to a given WSS output port 2 and to adjust their output power band-by-band towards the corresponding WSS output port 2.

The optical switching apparatus also comprises secondary output WSSs 4, 14, 104 and 1004 which are also acting as multiplexers. The primary and secondary output WSSs are cascaded. For example, a common port 10 of the WSS 4 is connected to one of the input ports of the WSS 5. WSSs 14 and 15, respectively 104 and 105 and 1004 and 1005 are also cascaded.

Similarly, when it is acting as a demultiplexer, as primary input WSS 3, 13, 103 and 1003 are, a common port serves as a WSS input port 2 and a plurality of selectable ports serve as WSS output ports 12.

The width of the spectral bands switched by the WSSs 3, 13, 103, 1003, WSSs 4, 14, 104 and 1004 and WSSs 5, 15, 105 and 1005 depends on the design of the WSSs. Preferably, this width is selected to match a single wavelength channel of a standard ITU grid. Alternatively, this width is selected as a multiple of a standard ITU channel spacing. Some advanced WSSs can also provide an adaptable filtering function with adjustable spectral width. This feature makes it possible to implement flexible optical frequency grids in the WDM network, i.e. so-called gridless signals. For the sake of clarity, the filter width of the WSSs 3, 13, 103, 1003, WSSs 4, 14, 104, 1004 and WSSs 5, 15, 105, 1005 corresponds to a single wavelength channel of a standard ITU grid in the following non limitative example.

The configuration state of such WSSs is driven as follow: the control plane determines which wavelength channel of the incoming WDM optical signal arriving from one of the nodes A, B, C and D has to be detected and steered to an adjacent node. If an optical signal which is incoming from node A on a wavelength channel arrives at the input of the primary input WSS 3 and is supposed to be routed to node B, then the primary input WSS 3 steers it from the input port 2 of the WSS 3 to a selected output 18 of the WSS 3 linked to an input port 17 of the secondary output through a transit path 6.

Then, the secondary output WSS 14 routes it to the WSS output port 19 of the secondary output WSS 14. This WSS output port 19 is linked to a WSS input port 10 of the primary output WSS 15. The primary output WSS 15 then transmits the signal from the WSS input port 10 to the WSS output port 2 and therefore transmits the signal to the node B.

The driving commands of the primary input WSS 3 are the identification of the band of optical frequencies for which a path should be established between an input port and an output port, by means of two optical frequencies defining the band of optical frequencies and port identifiers identifying the corresponding pair of input port and output port.

For the sake of clarity, only four adjacent nodes A, B, C and D are represented, but any number of interconnected adjacent nodes may be considered as soon as the optical switching device implementation takes into account the dimensioning constraints as will be explained below, hence considering the following parameters that are: the insertion losses, the available number of WSS ports, etc.

With reference to Figure 2, in an illustrative example, a primary input WSS 20 and a secondary input WSS 21 which are cascaded are represented. The primary input WSS 20 acts as a demultiplexer. A common WSS input port 2 allows transmitting a WDM signal to the primary input WSS 20 which selectively steers the optical signals on channels of the WDM signal on the selective WSS output ports 24 and 23. The selective WSS output port 23 is dedicated to the transmission of optical signals to the secondary input WSS 21, also called expansion WSS which also acts as a demultiplexer. For this purpose, the WSS output port 23 is connected to an amplifier 22 which is connected to a common WSS input port 27 of the secondary input WSS 21. The secondary input WSS 21 also has a number of selective WSS output ports 25 and 26. The selective WSS output ports 24 are dedicated to the transmission of signals to adjacent nodes. An optical signal which is steered by the primary input WSS 20 to one of the WSS output port 24 experiences one filtering function corresponding to the filtering function of the primary input WSS 20. The selective WSS output ports 26 are also dedicated to the transmission of signals to adjacent nodes. An optical signal which is steered by the secondary input WSS 21 to one of the WSS output port 26 experiences two filtering functions corresponding to the filtering function of the primary input WSS 20 plus the filtering function of the secondary input WSS 21. The selective WSS output ports 25 are dedicated to the transmission of signals to a drop module. A drop module is used in order to demodulate signals which are supposed to be detected in an optical node such as node E. In the following, add or drop modules will be referred to as A/D modules. In an embodiment, an A/D module comprises a NxM MultiCast Switch. In another embodiment, an A/D module comprises a NxM WSS. The number N refers to a number of selective input ports and the number M refers to a number of selective output ports.

Cascading WSSs is useful in order to increase the interconnection capacity. For instance, cascading a first 1x20 WSS to a second 1x20 WSS results in a 1x39-like WSS. The number of the first WSS input ports is equal to 1 and the number of the first WSS output ports is equal to 20. The same applies to the second 1x20 WSS. By comparison with the first or the second 1x20 WSSs, which are not cascaded, the 1x39-like WSS has an extra number of WSS output ports which can be used to increase the interconnection capacity in an optical switching apparatus. Indeed, the extra number of WSS output ports, which is equal in this example to 19, can be used to connect more transit paths in order to connect more adjacent nodes. Therefore, the extra number of WSS output ports allows increasing the connectivity degree of the optical switching apparatus. The extra WSS output ports can also be used to connect more A/D modules in order to increase the add or drop capacity of the optical switching apparatus.

In an embodiment, the number of selective WSS output ports 24 is equal to the number of selective WSS output ports 26.

In an non-illustrated embodiment, two secondary WSSs are connected to a same primary WSS. In this arrangement, the transit paths are preferably arranged so as to use a same number of ports of the primary WSS and of the two secondary WSSs. Namely, the number of selective WSS output ports of the primary WSS which are dedicated to the transmission of transit traffic to adjacent nodes is equal to the cumulated number of selective output ports of the first and the second secondary WSSs which are dedicated to the transmission of transit traffic to adjacent nodes.

With reference again to Figure 3, the WSS output ports of the primary input WSSs 3, 13, 103 and 1003 are either dedicated to the transmission of the incoming signals to the adjacent nodes or dedicated to the transmission of the incoming signals to drop modules. In the first case, when connected to transit paths, such ports are called transit ports 18, 12 and in the second case, when connected to drop modules, such ports are called drop ports 7.

Similarly, the WSS input ports of the primary output WSSs 5, 15, 105 and 1005 and of the secondary output WSSs 4, 14, 104 and 1004 are either dedicated to the reception of the incoming signals from the adjacent nodes or dedicated to the reception of signals incoming from add modules. In the first case, when connected to transit paths, such ports are called transit ports 17 and in the second case, when connected to drop modules, such ports are called add ports 8.

Some input ports 11 of primary or secondary output WSSs may be connected to nothing, in order to remain available. These ports are useful for further connectivity and/or capacity deployment, also referred to as "pay-as-you grow" deployment.

The global traversed filtering functions experienced by each optical signal in the optical switching apparatus 9 should be as uniform as possible in order to avoid impairing the OSNR of the optical signals. As a rule, each incoming optical signal which is routed in the optical switching apparatus should experience a same number of filtering functions. Therefore, as a rule, a transit path has to be connected to a secondary WSS transit port and a primary WSS transit port. The number of filtering functions experienced by an optical signal which transits through the apparatus 9 is therefore always equal to 3.

In the particular implementation represented on Figure 3, a secondary output WSS 4, 14, 104 and 1004 is connected to each primary output WSS 5, 15, 105 and 1005 of the apparatus, whereas no secondary input WSSs are connected to the primary input WSSs 3, 13, 103 and 1003 of the apparatus.

This implementation allows connecting the primary input WSSs 3, 13, 103 and 1003 to the secondary output WSSs 4, 14, 104 and 1004 by transit paths 6, 16 and 116 respecting the above rule. The available transit paths which respect the above rule allow interconnecting each adjacent node to each other. By contrast, there are not any transit paths directly connecting primary input WSSs 3, 13, 103 and 1003 to the primary output WSSs 5, 15, 105 and 1005. Indeed, such transit paths could not respect the above rule.

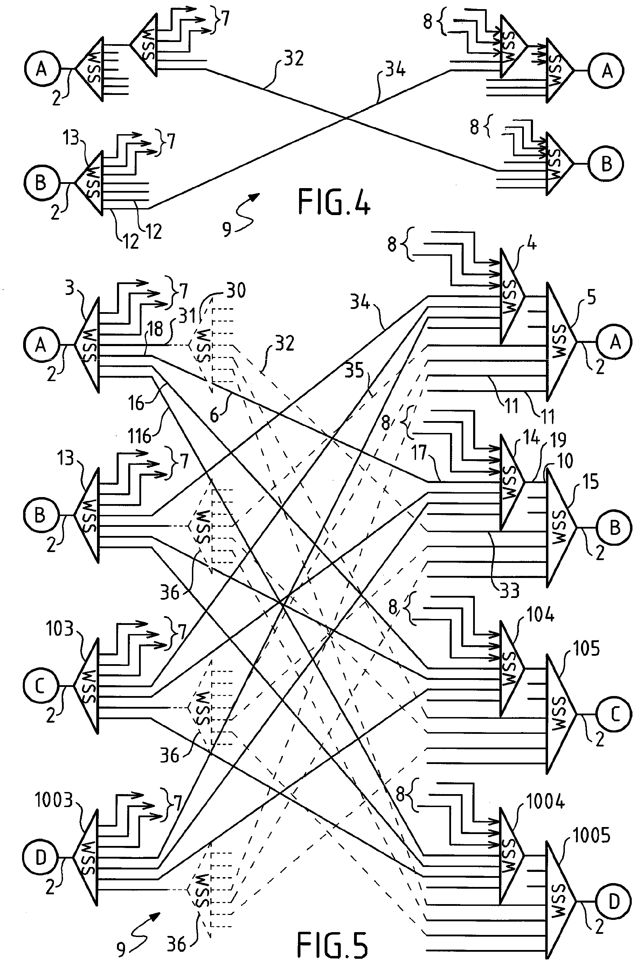

In an embodiment represented with reference to illustrative Figure 4, an optical switching apparatus 9 is represented. The optical switching apparatus allows in particular connecting a node A and a node B. In this figure, parts similar to those of the Figure 3 are identified by the same reference numbers and will not be described again. As described on the Figure 4, the primary output WSS connected to the node A is cascaded with a secondary output WSS and the primary input WSS connected to the node A is cascaded with a secondary input WSS. The node B is connected to a primary input WSS and a primary output WSS, none of which are connected to a secondary WSS. The number of secondary input WSSs and secondary output WSSs of the apparatus 9 is therefore the same. As well as for the implementation described with reference to Figure 3, the implementation of Figure 4 notably allows transit paths 32 and 34 respecting the above rule. The available transit paths which respect the rule allow interconnecting each adjacent node to each other.

In an embodiment represented with reference to illustrative Figure 5, an optical switching apparatus 9 is represented. In this figure, parts similar to those of the Figure 3 are identified by the same reference numbers and will not be described again. In the particular implementation represented on Figure 5, a secondary output WSS 4, 14, 104 and 1004 is connected to each primary output WSS 5, 15, 105 and 1005 of the apparatus, and a secondary input WSS 30 is connected on each primary input WSSs 3, 13, 103 and 1003 of the apparatus 9. By comparison with the implementation described with reference to Figure 3, additional transit paths 32, 35 respecting the above rule are available, connecting secondary input WSSs 30 to primary output WSSs 5, 15, 105 and 1005. By comparison with the implementation described with reference to Figure 3, the optical switching apparatus 9 has an higher transit capacity thanks to the additional transit paths 32, 35. This is due to the additional secondary WSSs 30 and 36.

One of the advantage of the same-number-of-filters-on-all-transit-paths rule is to allow a pay-as-you grow evolution of an optical switching apparatus 9 in which the number of filtering functions experienced by an optical signal is always the same, whatever the transit capacity required.

The invention is not limited to the described embodiments. The appended claims are to be construed as embodying all modifications and alternative constructions that may be occurred to one skilled in the art, which fairly fall within the basic teaching here, set forth.

The use of the verb "to comprise" or "to include" and its conjugations does not exclude the presence of elements or steps other than those stated in a claim. Furthermore, the use of the article "a" or "an" preceding an element or step does not exclude the presence of a plurality of such elements or steps.

In the claims, any reference signs placed between parentheses shall not be construed as limiting the scope of the claims.

## Claims

1. An optical switching apparatus (9) for a WDM optical network (1), the optical switching apparatus comprising:
- a plurality of WDM optical input ports (2) for receiving WDM optical signals from adjacent nodes (A to D), and
- a plurality of WDM optical output ports (2) for transmitting WDM optical signals to the adjacent nodes, and
- a plurality of transit paths (6, 16, 116, 32, 34, 35) for transmitting optical signals from the WDM optical input ports (2) to the WDM optical output ports (2) of the optical switching apparatus,
**characterized in that** the optical switching apparatus further comprises:
- a plurality of primary input WSSs (3, 13, 103, 1003), each primary input WSS comprising an input port (2) and a plurality of selective output ports (12, 18) and being arranged as a programmable wavelength demultiplexer, wherein the input port of each primary input WSS is connected to a respective one of the WDM optical input ports, and
- a plurality of primary output WSSs (5, 15, 105, 1005), wherein each primary output WSS comprising an output port (2) and a plurality of selective input ports (10, 11) and being arranged as a programmable wavelength multiplexer, wherein the output port (2) of each primary output WSS is connected to a respective one of the WDM optical output ports, and
- a plurality of secondary WSSs (4, 14, 104, 1004, 30, 36), each secondary WSS being selected in the group consisting of a secondary input WSS (30, 36) and a secondary output WSS (4, 14, 104, 1004), the secondary input WSS comprising an input port (31) and a plurality of selective output ports (32) and being arranged as a programmable wavelength demultiplexer, wherein the input port (31) of the secondary input WSS (30) is connected to an output port (33) of a primary input WSS (15), and the secondary output WSS (4, 14, 104, 1004) comprising an output port (19) and a plurality of selective input ports (17) and being arranged as a programmable wavelength multiplexer, wherein the output port (19) of the secondary output WSS is connected to an input port (10) of a primary output WSS (15), and
wherein each of the transit paths is selected in the group consisting of:
- transit paths (6) connecting an output port (18) of a primary input WSS (3) to an input port (17) of a secondary output WSS (14), and
- transit paths (32) connecting an output port of a secondary input WSS (30) to an input port (33) of a primary output WSS (15).

2. The apparatus according to claim 1, wherein the WDM optical input ports (2) and the WDM optical output ports (2) are arranged as a plurality of pairs of WDM ports, wherein a respective pair of WDM ports comprises one respective WDM optical input port and one respective WDM optical output port intended to be connected to a same adjacent node (A to D),
wherein, for each pair of WDM ports whose WDM optical input port (2) is connected to the input port of a primary input WSS (3, 13, 103, 1003) and whose WDM optical output port (2) is connected to the output port of a primary output WSS (5, 15, 105, 1005), a respective one of the secondary WSSs is associated to the pair of WDM ports, wherein the associated secondary WSS is selected in the group consisting of:
- a secondary input WSS (30, 36) being connected to the primary input WSS having an input connected to the WDM input port of the pair of WDM ports, and
- a secondary output WSS (4, 14, 104, 1004) being connected to the primary output WSS having an output connected to the WDM output port of the pair.

3. The apparatus according to claim 1 or claim 2, wherein each primary input WSS (3, 13, 103, 1003) is connected to a secondary input WSS (30, 36)).

4. The apparatus according to any one of claims 1 to 3, wherein each primary output WSS (5, 15, 105, 1005) is connected to a secondary output WSS (4, 14, 104, 1004).

5. The apparatus according to any one of claims 1 to 4, wherein a primary input WSS (3, 13, 103, 1003) has a first selective output port (18) connected to a first secondary input WSS (14) and a second selective output port connected to a second secondary input WSS.

6. The apparatus according to any one of claims 1 to 5, wherein a primary output WSS is connected to a first secondary output WSS and to a second secondary output WSS.

7. The apparatus according to any one of claims 1 to 6, wherein a primary input WSS (20) which is connected to at least one secondary input WSS (21) has primary transit ports (24) and wherein the at least one secondary input WSS has secondary transit ports (26),
wherein the primary transit ports are the output ports of the primary input WSS which are directly connected to the transit path, wherein the secondary transit ports are the output ports of the secondary input WSS which are directly connected to the transit paths,
wherein a number of the primary transit ports (24) is equal to a cumulated number of the secondary transit ports (26) of the at least one secondary input WSS.

8. The apparatus according to any one of claims 1 to 7, wherein a primary output WSS which is connected to at least one secondary output WSS has primary transit ports and wherein the at least one secondary output WSS has secondary transit ports,
wherein the primary transit ports are the input ports of the primary output WSS which are directly connected to the transit path, wherein the secondary transit ports are the input ports of the secondary output WSS which are directly connected to the transit paths,
wherein a number of the primary transit ports is equal to a cumulated number of the secondary transit ports of the at least one secondary output WSS.

9. The apparatus according to any one of claims 1 to 8, wherein each primary input WSS which is connected to at least one secondary input WSS has primary transit ports and wherein the at least one secondary input WSS has secondary transit ports,
wherein the primary transit ports are the output ports of the primary input WSS which are directly connected to the transit path, wherein the secondary transit ports are the output ports of the secondary input WSS which are directly connected to the transit paths,
wherein a number of the primary transit ports is equal to a cumulated number of the secondary transit ports of the at least one secondary input WSS.

10. The apparatus according to any one of claims 1 to 9, wherein each primary output WSS which is connected to at least one secondary output WSS has primary transit ports and wherein the at least one secondary output WSS has secondary transit ports,
wherein the primary transit ports are the input ports of the primary output WSS which are directly connected to the transit path, wherein the secondary transit ports are the input ports of the secondary output WSS which are directly connected to the transit paths,
wherein a number of the primary transit ports is equal to a cumulated number of the secondary transit ports of the at least one secondary output WSS.

11. The apparatus according to any one of claims 1 to 10, wherein each primary input WSS and each primary output WSS has the same number of transit ports.

12. The apparatus according to any one of claim 11, wherein the number of adjacent nodes (A to D) connectable to the apparatus is equal to half the number of transit ports (12) of each primary input WSS and each primary output WSS (17).

13. The apparatus according to any one of claims 1 to 12, wherein the WDM optical input ports and the WDM optical output ports are arranged as a plurality of pairs of WDM ports, wherein a respective pair of WDM ports comprises one respective WDM optical input port and one respective WDM optical output port intended to be connected to a same adjacent node,
wherein each of the transit paths is selected in the group consisting of:
- transit paths connecting an output port of a primary input WSS to an input port of a secondary output WSS , the primary input WSS being connected to a WDM optical input port and the secondary output WSS being connected to a primary output WSS which is connected to a WDM optical output port, the WDM optical input port and the WDM optical output port belonging to two different pairs of WDM ports ;
- transit paths connecting an output port of a secondary input WSS to an input port of a primary output WSS, the secondary input WSS being connected to a primary input WSS which is connected to a WDM optical input port and the primary output WSS being connected to a WDM optical output port, the WDM optical input port and the WDM optical output port belonging to two different pairs of WDM ports.

14. The apparatus according to any one of claims 1 to 13, wherein the number of primary input WSSs (3, 13, 103, 1003) is equal to the number of primary output WSSs (5, 15, 105, 1005).

15. The apparatus according to any one of claims 1 to 14, wherein the number of secondary input WSSs (30, 36) is equal to the number of secondary output WSSs (4, 14, 104, 1004).

## Patentansprüche

1. Optische Schaltvorrichtung (9) für ein optisches WDM-Netzwerk (1), wobei die optische Schaltvorrichtung Folgendes umfasst:
- eine Vielzahl von optischen WDM-Eingangsports (2) zum Empfangen von optischen WDM-Signalen von benachbarten Knoten (A bis D), und
- eine Vielzahl von optischen WDM-Ausgangsports (2) zum Senden von optischen WDM-Signalen an die benachbarten Knoten, und
- eine Vielzahl von Durchgangspfaden (6, 16, 116, 32, 34, 35) zum Senden von optischen Signalen von den optischen WDM-Eingangsports (2) an die optischen WDM-Ausgangsports (2) der optischen Schaltvorrichtung,
**dadurch gekennzeichnet, dass** die optische Schaltvorrichtung weiterhin Folgendes umfasst:
- eine Vielzahl von primären Eingangs-WSSn (3, 13, 103, 1003), wobei jeder primäre Eingangs-WSS einen Eingangsport (2) und eine Vielzahl von selektiven Ausgangsports (12, 18) umfasst und als ein programmierbarer Wellenlängen-Demultiplexer angeordnet ist, wobei der Eingangsport von jedem primären Eingangs-WSS mit einem jeweiligen der optischen WDM-Eingangsports verbunden ist, und
- eine Vielzahl von primären Ausgangs-WSSn (5, 15, 105, 1005), wobei jeder primäre Ausgangs-WSS einen Ausgangsport (2) und eine Vielzahl von selektiven Eingangsports (10, 11) umfasst und als ein programmierbarer Wellenlängen-Multiplexer angeordnet ist, wobei der Ausgangsport (2) von jedem primären Ausgangs-WSS mit einem jeweiligen der optischen WDM-Ausgangsports verbunden ist, und
- eine Vielzahl von sekundären WSSn (4, 14, 104, 1004, 30, 36), wobei jeder sekundäre WSS aus der Gruppe gewählt wird bestehend aus einem sekundären Eingangs-WSS (30, 36) und einem sekundären Ausgangs-WSS (4, 14, 104, 1004), wobei der sekundäre Eingangs-WSS einen Eingangsport (31) und eine Vielzahl von selektiven Ausgangsports (32) umfasst und als ein programmierbarer Wellenlängen-Demultiplexer angeordnet ist, wobei der Eingangsport (31) des sekundären Eingangs-WSS (30) mit einem Ausgangsport (33) eines primären Eingangs-WSS (15) verbunden ist, und wobei der sekundäre Ausgangs-WSS (4, 14, 104, 1004) einen Ausgangsport (19) und eine Vielzahl von selektiven Eingangsports (17) umfasst und als ein programmierbarer Wellenlängen-Multiplexer angeordnet ist, wobei der Ausgangsport (19) des sekundären Ausgangs-WSS mit einem Eingangsport (10) eines primären Ausgangs-WSS (15) verbunden ist, und
wobei jeder der Durchgangspfade aus der Gruppe gewählt wird bestehend aus:
- Durchgangspfaden (6), die einen Ausgangsport (18) eines primären Eingangs-WSS (3) mit einem Eingangsport (17) eines sekundären Ausgangs-WSS (14) verbinden, und
- Durchgangspfaden (32), die einen Ausgangsport eines sekundären Eingangs-WSS (30) mit einem Eingangsport (33) eines primären Ausgangs-WSS (15) verbinden.

2. Vorrichtung nach Anspruch 1, wobei die optischen WDM-Eingangsports (2) und die optischen WDM-Ausgangsports (2) als eine Vielzahl von WDM-Port-Paaren angeordnet sind, wobei ein jeweiliges WDM-Port-Paar einen jeweiligen optischen WDM-Eingangsport und einen jeweiligen optischen WDM-Ausgangsport umfasst, die mit einem gleichen benachbarten Knoten (A bis D) verbunden werden sollen,
wobei für jedes WDM-Port-Paar, dessen optischer WDM-Eingangsport (2) mit dem Eingangsport eines primären Eingangs-WSS (3, 13, 103, 1003) verbunden ist und dessen optischer WDM-Ausgangsport (2) mit dem Ausgangsport eines primären Ausgangs-WSS (5, 15, 105, 1005) verbunden ist, ein Jeweiliger der sekundären WSS dem WDM-Port-Paar zugeordnet ist, wobei der zugeordnete sekundäre WSS aus der Gruppe gewählt wird bestehend aus:
- einem sekundären Eingangs-WSS (30, 36), der mit dem primären Eingangs-WSS verbunden ist, der einen Eingang aufweist, der mit dem WDM-Eingangsport des WDM-Port-Paars verbunden ist, und
- einem sekundären Ausgangs-WSS (4, 14, 104, 1004), der mit dem primären Ausgangs-WSS verbunden ist, der einen Ausgang aufweist, der mit dem WDM-Ausgangsport des Paars verbunden ist.

3. Vorrichtung nach Anspruch 1 oder 2, wobei jeder primäre Eingangs-WSS (3, 13, 103, 1003) mit einem sekundären Eingangs-WSS (30, 36) verbunden ist.

4. Vorrichtung nach einem beliebigen der Ansprüche 1 bis 3, wobei jeder primäre Ausgangs-WSS (5, 15, 105, 1005) mit einem sekundären Ausgangs-WSS (4, 14, 104, 1004) verbunden ist.

5. Vorrichtung nach einem beliebigen der Ansprüche 1 bis 4, wobei ein primärer Eingangs-WSS (3, 13, 103, 1003) einen ersten selektiven Ausgangsport (18) aufweist, der mit einem ersten sekundären Eingangs-WSS (14) verbunden ist, und einen zweiten selektiven Ausgangsport, der mit einem zweiten sekundären Eingangs-WSS verbunden ist.

6. Vorrichtung nach einem beliebigen der Ansprüche 1 bis 5, wobei ein primärer Ausgangs-WSS mit einem ersten sekundären Ausgangs-WSS und mit einem zweiten sekundären Ausgangs-WSS verbunden ist.

7. Vorrichtung nach einem beliebigen der Ansprüche 1 bis 6, wobei ein primärer Eingangs-WSS (20), der mit mindestens einem sekundären Eingangs-WSS (21) verbunden ist, primäre Durchgangsports (24) aufweist und wobei der mindestens eine sekundäre Eingangs-WSS sekundäre Durchgangsports (26) aufweist,
wobei die primären Durchgangsports die Ausgangsports des primären Eingangs-WSS sind, die mit dem Durchgangspfad direkt verbunden sind, wobei die sekundären Durchgangsports die Ausgangsports des sekundären Eingangs-WSS sind, die mit den Durchgangspfaden direkt verbunden sind,
wobei eine Anzahl der primären Durchgangsports (24) gleich ist wie eine kumulierte Anzahl der sekundären Durchgangsports (26) des mindestens einen sekundären Eingangs-WSS.

8. Vorrichtung nach einem beliebigen der Ansprüche 1 bis 7, wobei ein primärer Ausgangs-WSS, der mit mindestens einem sekundären Ausgangs-WSS verbunden ist, primäre Durchgangsports aufweist und wobei der mindestens eine sekundäre Ausgangs-WSS sekundäre Durchgangsports aufweist,
wobei die primären Durchgangsports die Eingangsports des primären Ausgangs-WSS sind, die mit dem Durchgangspfad direkt verbunden sind, wobei die sekundären Durchgangsports die Eingangsports des sekundären Ausgangs-WSS sind, die mit den Durchgangspfaden direkt verbunden sind,
wobei eine Anzahl der primären Durchgangsports gleich ist wie eine kumulierte Anzahl der sekundären Durchgangsports des mindestens einen sekundären Ausgangs-WSS.

9. Vorrichtung nach einem beliebigen der Ansprüche 1 bis 8, wobei jeder primäre Eingangs-WSS, der mit mindestens einem sekundären Eingangs-WSS verbunden ist, primäre Durchgangsports aufweist und wobei der mindestens eine sekundäre Eingangs-WSS sekundäre Durchgangsports aufweist,
wobei die primären Durchgangsports die Ausgangsports des primären Eingangs-WSS sind, die mit dem Durchgangspfad direkt verbunden sind, wobei die sekundären Durchgangsports die Ausgangsports des sekundären Eingangs-WSS sind, die mit den Durchgangspfaden direkt verbunden sind,
wobei eine Anzahl der primären Durchgangsports gleich ist wie eine kumulierte Anzahl der sekundären Durchgangsports des mindestens einen sekundären Eingangs-WSS.

10. Vorrichtung nach einem beliebigen der Ansprüche 1 bis 9, wobei jeder primäre Ausgangs-WSS, der mit mindestens einem sekundären Ausgangs-WSS verbunden ist, primäre Durchgangsports aufweist und wobei der mindestens eine sekundäre Ausgangs-WSS sekundäre Durchgangsports aufweist,
wobei die primären Durchgangsports die Eingangsports des primären Ausgangs-WSS sind, die mit dem Durchgangspfad direkt verbunden sind, wobei die sekundären Durchgangsports die Eingangsports des sekundären Ausgangs-WSS sind, die mit den Durchgangspfaden direkt verbunden sind,
wobei eine Anzahl der primären Durchgangsports gleich ist wie eine kumulierte Anzahl der sekundären Durchgangsports des mindestens einen sekundären Ausgangs-WSS.

11. Vorrichtung nach einem beliebigen der Ansprüche 1 bis 10, wobei jeder primäre Eingangs-WSS und jeder primäre Ausgangs-WSS die gleiche Anzahl von Durchgangsports aufweist.

12. Vorrichtung nach Anspruch 11, wobei die Anzahl von benachbarten Knoten (A bis D), die mit der Vorrichtung verbindbar sind, gleich ist wie die Hälfte der Anzahl von Durchgangsports (12) von jedem primären Eingangs-WSS und jedem primären Ausgangs-WSS (17).

13. Vorrichtung nach einem beliebigen der Ansprüche 1 bis 12, wobei die optischen WDM-Eingangsports und die optischen WDM-Ausgangsports als eine Vielzahl von WDM-Port-Paaren angeordnet sind, wobei ein jeweiliges WDM-Port-Paar einen jeweiligen optischen WDM-Eingangsport und einen jeweiligen optischen WDM-Ausgangsport umfasst, die mit einem gleichen benachbarten Knoten verbunden werden sollen,
wobei jeder der Durchgangspfade aus der Gruppe gewählt wird bestehend aus:
- Durchgangspfaden, die einen Ausgangsport eines primären Eingangs-WSS mit einem Eingangsport eines sekundären Ausgangs-WSS verbinden, wobei der primäre Eingangs-WSS mit einem optischen WDM-Eingangsport verbunden ist und der sekundäre Ausgangs-WSS mit einem primären Ausgangs-WSS verbunden ist, der mit einem optischen WDM-Ausgangsport verbunden ist, wobei der optische WDM-Eingangsport und der optische WDM-Ausgangsport zu zwei unterschiedlichen WDM-Port-Paaren gehören;
- Durchgangspfaden, die einen Ausgangsport eines sekundären Eingangs-WSS mit einem Eingangsport eines primären Ausgangs-WSS verbinden, wobei der sekundäre Eingangs-WSS mit einem primären Eingangs-WSS verbunden ist, der mit einem optischen WDM-Eingangsport verbunden ist, und der primäre Ausgangs-WSS mit einem optischen WDM-Ausgangsport verbunden ist, wobei der optische WDM-Eingangsport und der optische WDM-Ausgangsport zu zwei unterschiedlichen WDM-Port-Paaren gehören.

14. Vorrichtung nach einem beliebigen der Ansprüche 1 bis 13, wobei die Anzahl von primären Eingangs-WSSn (3, 13, 103, 1003) gleich ist wie die Anzahl von primären Ausgangs-WSSn (5, 15, 105, 1005).

15. Vorrichtung nach einem beliebigen der Ansprüche 1 bis 14, wobei die Anzahl von sekundären Eingangs-WSSn (30, 36) gleich ist wie die Anzahl von sekundären Ausgangs-WSSn (4, 14, 104, 1004).

## Revendications

1. Appareil de commutation optique (9) pour un réseau optique WDM (1), l'appareil de commutation optique comprenant :
- une pluralité de ports d'entrée optique WDM (2) pour recevoir des signaux optiques WDM à partir de noeuds adjacents (A à D), et
- une pluralité de ports de sortie optique WDM (2) pour transmettre des signaux optiques WDM aux noeuds adjacents, et
- une pluralité de chemins de transit (6, 16, 116, 32, 34, 35) pour transmettre des signaux optiques à partir des ports d'entrée optique WDM (2) aux ports de sortie optique WDM (2) de l'appareil de commutation optique,
**caractérisé en ce que** l'appareil de commutation optique comprend en outre :
- une pluralité de WSS d'entrée primaires (3, 13, 103, 1003), chaque WSS d'entrée primaire comprenant un port d'entrée (2) et une pluralité de ports de sortie sélectifs (12, 18) et étant agencé comme un démultiplexeur de longueur d'onde programmable, dans lequel le port d'entrée de chaque WSS d'entrée primaire est connecté à un port respectif parmi les ports d'entrée optique WDM, et
- une pluralité de WSS de sortie primaires (5, 15, 105, 1005), dans lequel chaque WSS de sortie primaire comprend un port de sortie (2) et une pluralité de ports d'entrée sélectifs (10, 11) et est agencé comme un multiplexeur de longueur d'onde programmable, dans lequel le port de sortie (2) de chaque WSS de sortie primaire est connecté à un port respectif parmi les ports de sortie optique WDM, et
- une pluralité de WSS secondaires (4, 14, 104, 1004, 30, 36), chaque WSS secondaire étant choisi dans le groupe constitué d'un WSS d'entrée secondaire (30, 36) et d'un WSS de sortie secondaire (4, 14, 104, 1004), le WSS d'entrée secondaire comprenant un port d'entrée (31) et une pluralité de ports de sortie sélectifs (32) et étant agencé comme un démultiplexeur de longueur d'onde programmable, dans lequel le port d'entrée (31) du WSS d'entrée secondaire (30) est connecté à un port de sortie (33) d'un WSS d'entrée primaire (15), et le WSS de sortie secondaire (4, 14, 104, 1004) comprenant un port de sortie (19) et une pluralité de ports d'entrée sélectifs (17) et étant agencé comme un multiplexeur de longueur d'onde programmable, dans lequel le port de sortie (19) du WSS de sortie secondaire est connecté à un port d'entrée (10) d'un WSS de sortie primaire (15), et
dans lequel chacun des chemins de transit est choisi dans le groupe constitué :
- de chemins de transit (6) connectant un port de sortie (18) d'un WSS d'entrée primaire (3) à un port d'entrée (17) d'un WSS de sortie secondaire (14), et
- de chemins de transit (32) connectant un port de sortie d'un WSS d'entrée secondaire (30) à un port d'entrée (33) d'un WSS de sortie primaire (15).

2. Appareil selon la revendication 1, dans lequel les ports d'entrée optique WDM (2) et les ports de sortie optique WDM (2) sont agencés comme une pluralité de paires de ports WDM, dans lequel une paire respective de ports WDM comprend un port d'entrée optique WDM respectif et un port de sortie optique WDM respectif destinés à être connectés à un même noeud adjacent (A à D),
dans lequel, pour chaque paire de ports WDM dont le port d'entrée optique WDM (2) est connecté au port d'entrée d'un WSS d'entrée primaire (3, 13, 103, 1003) et dont le port de sortie optique WDM (2) est connecté au port de sortie d'un WSS de sortie primaire (5, 15, 105, 1005), un WSS respectif parmi les WSS secondaires est associé à la paire de ports WDM, dans lequel le WSS secondaire associé est choisi dans le groupe constitué
- d'un WSS d'entrée secondaire (30, 36) connecté au WSS d'entrée primaire ayant une entrée connectée au port d'entrée WDM de la paire de ports WDM, et
- d'un WSS de sortie secondaire (4, 14, 104, 1004) connecté au WSS de sortie primaire ayant une sortie connectée au port de sortie WDM de la paire.

3. Appareil selon la revendication 1 ou la revendication 2, dans lequel chaque WSS d'entrée primaire (3, 13, 103, 1003) est connecté à un WSS d'entrée secondaire (30, 36).

4. Appareil selon l'une quelconque des revendications 1 à 3, dans lequel chaque WSS de sortie primaire (5, 15, 105, 1005) est connecté à un WSS de sortie secondaire (4, 14, 104, 1004).

5. Appareil selon l'une quelconque des revendications 1 à 4, dans lequel un WSS d'entrée primaire (3, 13, 103, 1003) a un premier port de sortie sélectif (18) connecté à un premier WSS d'entrée secondaire (14) et un deuxième port de sortie sélectif connecté à un deuxième WSS d'entrée secondaire.

6. Appareil selon l'une quelconque des revendications 1 à 5, dans lequel un WSS de sortie primaire est connecté à un premier WSS de sortie secondaire et à un deuxième WSS de sortie secondaire.

7. Appareil selon l'une quelconque des revendications 1 à 6, dans lequel un WSS d'entrée primaire (20) qui est connecté à au moins un WSS d'entrée secondaire (21) a des ports de transit primaires (24) et dans lequel l'au moins un WSS d'entrée secondaire a des ports de transit secondaires (26),
dans lequel les ports de transit primaires sont les ports de sortie du WSS d'entrée primaire qui sont directement connectés au chemin de transit, dans lequel les ports de transit secondaires sont les ports de sortie du WSS d'entrée secondaire qui sont directement connectés aux chemins de transit,
dans lequel un nombre des ports de transit primaires (24) est égal à un nombre cumulé des ports de transit secondaires (26) de l'au moins un WSS d'entrée secondaire.

8. Appareil selon l'une quelconque des revendications 1 à 7, dans lequel un WSS de sortie primaire qui est connecté à au moins un WSS de sortie secondaire a des ports de transit primaires et dans lequel l'au moins un WSS de sortie secondaire a des ports de transit secondaires, dans lequel les ports de transit primaires sont les ports d'entrée du WSS de sortie primaire qui sont directement connectés au chemin de transit, dans lequel les ports de transit secondaires sont les ports d'entrée du WSS de sortie secondaire qui sont directement connectés aux chemins de transit,
dans lequel un nombre des ports de transit primaires est égal à un nombre cumulé des ports de transit secondaires de l'au moins un WSS de sortie secondaire.

9. Appareil selon l'une quelconque des revendications 1 à 8, dans lequel chaque WSS d'entrée primaire qui est connecté à au moins un WSS d'entrée secondaire a des ports de transit primaires et dans lequel l'au moins un WSS d'entrée secondaire a des ports de transit secondaires,
dans lequel les ports de transit primaires sont les ports de sortie du WSS d'entrée primaire qui sont directement connectés au chemin de transit, dans lequel les ports de transit secondaires sont les ports de sortie du WSS d'entrée secondaire qui sont directement connectés aux chemins de transit,
dans lequel un nombre des ports de transit primaires est égal à un nombre cumulé des ports de transit secondaires de l'au moins un WSS d'entrée secondaire.

10. Appareil selon l'une quelconque des revendications 1 à 9, dans lequel chaque WSS de sortie primaire qui est connecté à au moins un WSS de sortie secondaire a des ports de transit primaires et dans lequel l'au moins un WSS de sortie secondaire a des ports de transit secondaires,
dans lequel les ports de transit primaires sont les ports d'entrée du WSS de sortie primaire qui sont directement connectés au chemin de transit, dans lequel les ports de transit secondaires sont les ports d'entrée du WSS de sortie secondaire qui sont directement connectés aux chemins de transit,
dans lequel un nombre des ports de transit primaires est égal à un nombre cumulé des ports de transit secondaires de l'au moins un WSS de sortie secondaire.

11. Appareil selon l'une quelconque des revendications 1 à 10, dans lequel chaque WSS d'entrée primaire et chaque WSS de sortie primaire a le même nombre de ports de transit.

12. Appareil selon la revendication 11, dans lequel le nombre de noeuds adjacents (A à D) pouvant être connectés à l'appareil est égal à la moitié du nombre de ports de transit (12) de chaque WSS d'entrée primaire et de chaque WSS de sortie primaire (17).

13. Appareil selon l'une quelconque des revendications 1 à 12, dans lequel les ports d'entrée optique WDM et les ports de sortie optique WDM sont agencés comme une pluralité de paires de ports WDM, dans lequel une paire respective de ports WDM comprend un port d'entrée optique WDM respectif et un port de sortie optique WDM respectif destinés à être connectés à un même noeud adjacent,
dans lequel chacun des chemins de transit est choisi dans le groupe constitué :
- de chemins de transit connectant un port de sortie d'un WSS d'entrée primaire à un port d'entrée d'un WSS de sortie secondaire, le WSS d'entrée primaire étant connecté à un port d'entrée optique WDM et le WSS de sortie secondaire étant connecté à un WSS de sortie primaire qui est connecté à un port de sortie optique WDM, le port d'entrée optique WDM et le port de sortie optique WDM appartenant à deux paires différentes de ports WDM;
- de chemins de transit connectant un port de sortie d'un WSS d'entrée secondaire à un port d'entrée d'un WSS de sortie primaire, le WSS d'entrée secondaire étant connecté à un WSS d'entrée primaire qui est connecté à un port d'entrée optique WDM et le WSS de sortie primaire étant connecté à un port de sortie optique WDM, le port d'entrée optique WDM et le port de sortie optique WDM appartenant à deux paires différentes de ports WDM.

14. Appareil selon l'une quelconque des revendications 1 à 13, dans lequel le nombre de WSS d'entrée primaires (3, 13, 103, 1003) est égal au nombre de WSS de sortie primaires (5, 15, 105, 1005).

15. Appareil selon l'une quelconque des revendications 1 à 14, dans lequel le nombre de WSS d'entrée secondaires (30, 36) est égal au nombre de WSS de sortie secondaires (4, 14, 104, 1004).
